# EUROPÄISCHE PATENTSCHRIFT

(11) **EP 3 008 334 B1**
(45) Veröffentlichungstag und Bekanntmachung des Hinweises auf die Patenterteilung: **26.09.2018**
(21) Anmeldenummer: 14731572.5
(22) Anmeldetag: 10.06.2014
(51) Int. Cl.: F03D 7/02, F03D 7/04, H02J 3/38

(54) **VERFAHREN ZUM EINSPEISEN ELEKTRISCHER LEISTUNG IN EIN ELEKTRISCHES VERSORGUNGSNETZ**
METHOD FOR FEEDING ELECTRIC POWER INTO AN ELECTRIC SUPPLY NETWORK
PROCÉDÉ POUR INJECTER UNE PUISSANCE ÉLECTRIQUE DANS UN RÉSEAU DE DISTRIBUTION ÉLECTRIQUE

(30) Priorität: 10.06.2013 DE 102013210812
(43) Veröffentlichungstag der Anmeldung: 20.04.2016
(73) Patentinhaber: Wobben Properties GmbH, 26607 Aurich (DE)
(72) Erfinder: BARTSCH, Matthias, 28215 Bremen (DE)
(74) Vertreter: Eisenführ Speiser
(86) Internationale Anmeldenummer: PCT/EP2014/062033
(87) Internationale Veröffentlichungsnummer: WO 2014/198725

(56) Entgegenhaltungen:
- EP-A2- 2 131 038
- EP-A2- 2 267 302
- EP-A2- 2 267 306
- WO-A2-2012/089699

## Beschreibung

Die vorliegende Erfindung betrifft ein Verfahren zum Einspeisen elektrischer Leistung mittels eines Windparks in ein elektrisches Versorgungsnetz. Außerdem betrifft die vorliegende Erfindung einen entsprechenden Windpark.

Das Einspeisen elektrischer Leistung mittels eines Windparks, der mehrere Windenergieanlagen umfasst, ist allgemein bekannt. Hier werden mehrere Windenergieanlagen in einem Windpark operativ zusammengefasst und speisen insbesondere über einen gemeinsamen Netzeinspeisepunkt, der auch als Netzanschlusspunkt oder PCC (Point of Common Coupling) bezeichnet wird, in das elektrische Versorgungsnetz ein. Der Windpark verfügt häufig über eine Parksteuerung oder eine Parksteuereinheit, die gemeinsame Aufgaben für den Windpark realisiert. Dazu kann beispielsweise die Übertragung von Informationen zwischen einem Netzbetreiber und einer Windenergieanlage gehören, oder die Umsetzung einer externen Leistungsvorgabe für die einzuspeisende Wirkleistung.

Weiterhin ist es heutzutage bekannt, dass Windenergieanlagen einschließlich Windparks, sich aktiv an der sogenannten Netzstützung des betreffenden elektrischen Versorgungsnetzes beteiligen. Hierzu gehört, einen Beitrag zur Stabilisierung der Spannung im elektrischen Versorgungsnetz zu leisten. Hierzu gehört auch, im Falle einer Netzstörung wie einem Netzkurzschluss Stabilisierungsmaßnahmen zu ergreifen. Häufig werden solche Eigenschaften des Windparks oder der Windenergieanlagen in Netzanschlussregeln des Betreibers des elektrischen Versorgungsnetzes (dem Netzbetreiber) vorgegeben und müssen gegebenenfalls von den Betreibern des Windparks oder der Windenergieanlagen nachgewiesen werden.

Eine Parksteuerung ist beispielsweise in der US-Anmeldung US 2006 0142899 A1 gezeigt. Verfahren zur Netzstützung sind beispielsweise beschrieben in DE 197 56 777, US 6 965 174 und US 7 462 946.

Die am Netzanschlusspunkt eingespeiste Leistung und damit der am Netzanschlusspunkt eingespeiste Strom - bzw. präzise ausgedrückt die eingespeisten Phasenströme - setzt sich aus den Strömen zusammen, die die einzelnen Windenergieanlagen erzeugen. Die Windenergieanlagen sind es damit, die die jeweiligen Ströme und damit im Ergebnis den eingespeisten Gesamtstrom nach Betrag und Phase erzeugen und bereitstellen. Dies erfolgt bei modernen Windenergieanlagen durch den Einsatz von jeweils einem oder mehreren Frequenzwechselrichtern. Die Windenergieanlagen führen damit auch entsprechende Maßnahmen zur Netzstabilisierung und Netzstützung durch. Problematisch ist insbesondere, zunehmend steigende Anforderungen an die Netzstützung durch Windenergieanlagen, insbesondere Windparks zu erfüllen. Auch kann das Erbringen eines Nachweises einer geforderten Netzstützungseigenschaft schwierig sein.

Problematisch kann insbesondere das schnelle Umsetzen einer Netzstützungsmaßnahme im Falle eines Spannungseinbruchs sein. Hierbei ist eine schnelle Erfassung einer Netzstörung, insbesondere eines Netzspannungseinbruchs problematisch, als auch eine schnelle Umsetzung von Netzstützungsmaßnahmen im Falle des Auftretens einer entsprechenden Netzstörung. Vorschläge für eine schnelle Messung wurden dabei bereits in der US 20120169059 A1 beschrieben. Damit sind bereits sehr schnelle Möglichkeiten der Erfassung eines Netzzustandes, insbesondere Netzspannung möglich. Eine schnelle Umsetzung im Falle einer Netzstörung kann dabei gleichwohl problematisch bleiben.

Die Dokumente EP 2 267 306 A2 und EP 2 267 302 A2 zeigen jeweils_eine Windparksteuereinheit, die dazu eingerichtet ist, Netzgrößen zu erfassen und in Abhängigkeit der erfassten Netzgrößen die einzelnen Windenergieanlagen des Windparks anzusteuern.

Der folgenden Erfindung liegt somit die Aufgabe zugrunde, zumindest eins der oben genannten Probleme zu adressieren. Insbesondere eine Lösung für eine Netzstützung hoher Qualität und/oder hoher Reaktionsgeschwindigkeit bei möglichst guter Nachweisbarkeit der Eigenschaften vorgeschlagen werden. Zumindest soll eine alternative Lösung geschaffen werden.

Erfindungsgemäß wird ein Verfahren nach Anspruch 1 vorgeschlagen. Diesem Verfahren liegt somit ein Windpark zugrunde, der mehrere Windenergieanlagen umfasst. Dieser Windpark speist in ein elektrisches Versorgungsnetz ein, nämlich an einem Netzanschlusspunkt, an dem auch wenigstens eine Netzzustandsgröße mittels einer Parksteuereinheit erfasst wird. Eine solche Zustandsgröße ist insbesondere die elektrische Netzspannung am Netzanschlusspunkt. Grundsätzlich kann das vorgeschlagene Verfahren auch für eine einzelne Windenergieanlage eingesetzt werden, die in das elektrische Versorgungsnetz einspeist.

Weiterhin wird das Versorgungsnetz daraufhin überprüft, ob ein transienter Vorgang im Netz vorliegt. Im Normalfall und damit im stationären Fall weist das elektrische *Versorgungsnetz* eine etwa sinusförmige Spannung mit fester Frequenz und fester Amplitude auf. Die Frequenz als auch die Amplitude können innerhalb sehr enger Grenzen variieren, ohne das Kriterium des normalen Zustands zu verlassen. Auch können geringe Abweichungen vom sinusförmigen Verlauf vorliegen, insbesondere symmetrische und nicht symmetrische Oberwellen. Als Spannungsamplitude kann hierbei die Verwendung des Effektivwertes der Spannung ausreichen. Häufig kann dabei auch ausreichen, nur die Spannung einer Phase zu verwenden.

Weicht die Spannung von diesem beschriebenen Normalzustand signifikant ab, indem sie beispielsweise auf einen Wert von weniger als 90 Prozent ihres Nennwertes abfällt, liegt ein transienter Vorgang vor. Ein transienter Vorgang bezeichnet somit die signifikante Abweichung vom normalen sinusförmigen Spannungsverlauf. Hierunter fällt auch eine Änderung zu einem solchen von dem normalen sinusförmigen Spannungsverlauf abweichenden Zustand. Insbesondere ist ein Beispiel für einen solchen transienten Vorgang der Einbruch der Netzspannung aufgrund eines Kurzschlusses im Netz. Hierdurch kann die Spannung schlagartig auf null abfallen. Die Spannung kann aber auch nur teilweise abfallen. Ein solcher nur teilweise Abfall liegt insbesondere dann vor, wenn die Spannung unmittelbar am Ort des Kurzschlusses auf null zusammenbricht, das betroffene Versorgungsnetz aber dennoch weiterbetrieben wird, sodass an anderen Punkten im Versorgungsnetz, die entsprechend weit von dem Ort des Kurzschlusses entfernt sind, eine Spannung gehalten werden kann. In jedem Fall kann aber ein schneller Spannungseinbruch vorliegen, auch wenn die Spannung an dem betrachteten Punkt nicht auf null abfällt.

Ein transienter Vorgang bezeichnet insoweit auch einen nicht stationären Zustand im Versorgungsnetz und auch deshalb wird ein solcher Vorgang als transienter Vorgang bezeichnet.

Wird ein transienter Vorgang erkannt, werden von der Parksteuereinheit aufgenommene Messwerte an die einzelnen Windenergieanlagen übertragen. Demnach werden Messwerte, insbesondere der elektrischen Spannung im Versorgungsnetz am Netzanschlusspunkt, zunächst nicht an die einzelnen Windenergieanlagen übertragen, sondern erst wenn ein transienter Vorgang erkannt wurde. Die Windenergieanlagen können also im normalen Zustand, wenn noch kein transienter Vorgang erkannt wurde, im Wesentlichen eigenständig arbeiten, zumindest eigenständiger arbeiten, als wenn der transiente Vorgang erkannt wurde.

Alternativ werden die aufgenommenen, insbesondere zu Effektivwerten gemittelten bzw. berechneten Messwerte auch im normalen Zustand von der Parksteuereinheit an die einzelnen Windenergieanlagen übertragen, aber mit einer geringeren Taktrate, wie beispielsweise mit einem Wert pro Sekunde. Wird ein transienter Vorgang erkannt, wird diese Übertragungstaktrate signifikant erhöht, wie beispielsweise auf 20 Millisekunden (ms), also ein Wert oder ein Wertepaket jede 20ms. Ein solcher Wert entspricht im Falle eines 50Hz-Netzes einem Wert oder einem Wertpaket für jeden Zyklus.

Die Windenergieanlagen erhalten somit bei erkanntem transienten Vorgang ihre Werte unmittelbar vom Netzanschlusspunkt und insbesondere mit einer sehr hohen Taktrate und können dadurch ihre Steuerung auf eine entsprechend notwendige Netzstützung umstellen. Durch das Übertragen der Werte vom Netzanschlusspunkt wird auch sichergestellt, dass sämtliche Windenergieanlagen in dem betreffenden Windpark dieselben Werte erhalten. Dadurch kann eine sehr enge Koordination der Windenergieanlagen untereinander erreicht werden.

Messwerte mit einer geringen Taktrate sind insbesondere solche, die berechnet werden, bspw. mittels einer Netzzustandsbeobachtung. Diese unterscheiden sich insoweit von Messwerten mit höherer Taktrate, die auch als hoch abgetastete Messwerte bezeichnet werden können und bei denen eine Taktrate, bzw. Tastrate, wenn sie auf die Erfassung bezogen ist, vorliegt, die wenigstens 1kHz, vorzugsweise 5kHz beträgt.

Sowohl die Erfassung von Messwerten, als auch die vorgeschlagene Übertragung von Messwerten, als auch die Bestimmung und Übertragung von Steuerwerten, was nachfolgend noch beschrieben wird, können mit hoher oder geringer Taktrate erfolgen, soweit gemäß einer konkreten Ausführungsform nicht etwas anderes ausdrücklich vorgeschlagen wird.

Außerdem oder alternativ wird vorgeschlagen, dass die Parksteuereinheit unmittelbar Steuerwerte, insbesondere einzustellende Sollwerte an die einzelnen Windenergieanlagen überträgt. Eine koordinierte Steuerung kommt insbesondere für netzstützende Maßnahmen in Betracht, und solche netzstützenden Maßnahmen können somit auf einfache Art und Weise durch die Parksteuereinheit durchgeführt werden. Die Parksteuereinheit braucht hierfür nicht über eigene Frequenzwechselrichter oder ähnliche Einrichtungen zum Konditionieren und Einspeisen elektrischen Stromes in das elektrische Versorgungsnetz zu verfügen. Sie erreicht die koordinierte Steuerung durch das Steuern der entsprechenden Einrichtungen der Windenergieanlagen. Vorzugsweise erfasst die Parksteuereinheit am Netzanschlusspunkt Details der aktuellen Einspeisung, insbesondere Höhe und Phase des eingespeisten Stroms, nämlich des eingespeisten Gesamtstroms des Windparks.

Gemäß einer Ausführungsform wird somit vorgeschlagen, dass als Netzzustandsgröße am Netzanschlusspunkt die elektrische Spannung des Versorgungsnetzes dort erfasst wird, der Phasenwinkel wenigstens eines eingespeisten Stroms und/oder die eingespeiste Blindleistung erfasst wird. Außerdem oder alternativ kann der Betrag des eingespeisten Stroms erfasst werden, wobei aus Betrag und Phase des eingespeisten Stroms unter Berücksichtigung der elektrischen Spannung die Blindleistung ermittelt werden kann. Über die Erfassung und ggf. zur Verfügung Stellung dieser zentralen Messwerte am Netzanschlusspunkt kann die Einspeisung des Windparks mittels der Windenergieanlagen des Windparks koordiniert werden. Außerdem kann hierdurch auch eine Nachweisbarkeit der Einspeiseeigenschaften des Windparks insgesamt verbessert, möglicherweise erst ermöglicht werden.

Vorzugsweise wird die Phase des einzuspeisenden Stromes als Steuerwert an die einzelnen Windenergieanlagen übertragen. Hierdurch kann Einfluss auf den einzuspeisenden Gesamtstrom, insbesondere den einzuspeisenden Blindstrom genommen werden.

Gemäß einer Ausführungsform wird vorgeschlagen, dass die an die Windenergieanlagen übermittelten Steuerwerte für jede der Windenergieanlagen individualisiert werden. Die Parksteuereinheit, der zunächst insbesondere einen Wert für die Netzspannung vorliegt sowie Gesamtwerte der eingespeisten Leistung und eingespeisten Blindleistung, kann zunächst Sollwerte für die einzuspeisende Gesamtblindleistung und/oder den einzuspeisenden Gesamtblindstrom bestimmen. Diese Gesamtwerte können dann auf die einzelnen Windenergieanlagen aufgeteilt werden. Für die einzelnen Windenergieanlagen kann somit daraus, oder aus anderen Werten, jeweils ein einzelner Sollwert berechnet und an die betreffende Windenergieanlage übertragen werden. Die Parksteuereinheit kann hier für die Gesamtsollwerte und Kenntnis über die einzelnen Windenergieanlagen im Windpark berücksichtigen. Sofern im Windpark alle Windenergieanlagen identisch und auch alle in Betrieb sind, können die Windenergieanlagen denselben Wert erhalten. Für unterschiedliche Windenergieanlagen im Windpark ist es möglich, diese Unterschiede, insbesondere in ihrer Nennleistung zu berücksichtigen. Dafür werden solche Steuerwerte individualisiert. Insbesondere beim Vorliegen gruppenweise gleicher oder im Wesentlichen gleicher Windenergieanlagen kann es vorteilhaft und ausreichend sein, solche Steuerwerte nur gruppenweise zu individualisieren. Jede Windenergieanlage einer Gruppe erhält dann also die gleichen Steuerwerte wie die anderen Windenergieanlagen in derselben Gruppe.

Dabei geben die Steuerwerte insbesondere jeweils einen Blindstromsollwert eines einzuspeisenden Blindstroms vor. Die Summe der Blindstromsollwerte aller Windenergieanlagen geben einen Gesamtblindstromsollwert an, der die Höhe des an dem Netzanschlusspunkt einzuspeisenden Blindstromes angibt. Der jeweilige Blindstromsollwert einer Windenergieanlage, der nämlich als Steuerwert von der Parksteuereinheit bereitgestellt wird, ist von der aktuellen Einspeisekapazität der betreffenden Windenergieanlage abhängig und vom Gesamtblindstromsollwert des Netzanschlusspunktes.

Dazu wird gemäß einer Ausführungsform vorgeschlagen, dass jede Windenergieanlage mehrere Einspeiseeinheiten aufweist, die insbesondere als Leistungsschränkte ausgebildet sein können. Diese Einspeiseeinheiten erzeugen jeweils einen Strom zum Einspeisen in das elektrische Versorgungsnetz und sie können als Wechselrichter ausgebildet sein oder Wechselrichter aufweisen. Vorzugsweise ist jede Einspeiseeinheit hinsichtlich ihrer Einspeiseleistung, insbesondere hinsichtlich des durch sie erzeugbaren und einspeisbaren Stroms gleich groß, insbesondere im Vergleich zu weiteren Windenergieanlagen im Windpark gleich groß, selbst wenn die Windenergieanlagen unterschiedlich groß sind. Es wird somit ein Konzept vorgeschlagen und zugrunde gelegt, bei dem unterschiedliche Einspeisekapazität durch eine unterschiedliche Anzahl von Wechselrichtern realisiert wird. Die Berechnung und Vorgabe des individualisierten Blindstromes oder anderen einzuspeisenden Stroms erfolgt für die einzelne Windenergieanlage vorzugsweise abhängig der jeweiligen Anzahl ihrer vorhandenen Einspeiseeinheiten, also der Anzahl ihrer Wechselrichtereinheiten.

Die Parksteuereinheit kennt hierbei die Anzahl der Einspeiseeinheiten jeder Windenergieanlage in dem Windpark und kann entsprechend die individualisierten Steuerwerte berechnen.

Gemäß einer weiteren Ausführungsform wird vorgeschlagen, dass der Blindstromsollwert und/oder ein Wirkleistungssollwert jeder Windenergieanlage oder jeder Gruppe von Windenergieanlagen abhängig der Nennwirkleistung und/oder des Nennwirkstroms der jeweiligen Windenergieanlage bestimmt wird und an die Windenergieanlagen entsprechend übertragen wird. Vorzugsweise werden nur die Einspeiseeinheiten und/oder nur die Windenergieanlagen berücksichtigt, die aktuell in Betrieb oder betriebsbereit sind.

Die jeweiligen Nennwirkleistungen oder Nennwirkströme sind somit repräsentativ für die einspeisbare Kapazität. Die Summe aller Nennwirkleistungen oder Nennwirkströme der zur Zeit in Betrieb befindlichen Windenergieanlagen gibt somit auch die insgesamt von dem Park verfügbare Wirkleistungskapazität oder Wirkstromkapazität wieder, soweit ausreichend Wind vorhanden ist.

Die Berücksichtigung des Nennstroms gibt ein Maß dafür an, wie viel Strom tatsächlich jeweils eingespeist werden kann. Die Auslegung der Windenergieanlagen, ihrer einzelnen Einspeiseeinheiten und/oder vorhandener Leitungen erfolgt basierend auf einem solchen Nennstrom und/oder kann einen solchen Nennstrom begrenzen. Selbst bei wenig Wind kann es möglich sein, eine hohe Blindleistung, oftmals sogar höher als die Wirkleistung einzuspeisen. Bei schwachem Wind kann zwar auch nur ein schwacher Wirkstrom, ggf. aber ein höherer Blindstrom erzeugt werden. Der Gesamtstrom und damit auch der Blindstrom, wird aber durch die technische Auslegung der Windenergieanlagen, insbesondere der Einspeiseeinheiten und/oder Anschlussleitungen begrenzt. Somit wird vorschlagen, dies zu berücksichtigen, was über die Berücksichtigung des jeweiligen Nennstromes erfolgen kann.

Gemäß einer Ausführungsform wird vorgeschlagen, dass die an die Windenergieanlagen (4) übermittelten Steuerwerte (i_{QS1}, i_{QS2}, i_{QS3})
- phasenweise unterschiedlich sind,
- einen Unsymmetriegrad beinhalten und/oder
- über eine Mitsystemkomponente und eine Gegensystemkomponente vorgegeben werden, wobei die übermittelten Steuerwerte insbesondere jeweils einen Blindstromsollwert (i_{QS1}, i_{QS2}, i_{QS3}) eines einzuspeisenden Blindstroms vorgeben.

Es wird somit von einem üblichen dreiphasigen System ausgegangen und berücksichtigt, dass Asymmetrien zwischen den Phasen auftreten können. Diese Asymmetrien werden auch für die zu übertragenden Steuerwerte berücksichtigt. Dazu werden verschiedene Möglichkeiten vorgeschlagen, einschließlich der Möglichkeit, die Methode der symmetrischen Komponenten anzuwenden und entsprechende die Steuerwerte über eine Mitsystemkomponente und eine Gegensystemkomponente vor zu gegeben. Insbesondere werden Sollwerte für einen einzuspeisenden Blindstrom vorgegeben.

Vorzugsweise wird ein transienter Vorgang dadurch erkannt, dass
- die Netzspannung unter einen vorbestimmten Spannungsgrenzwert fällt,
- die Netzspannung eine vorbestimmte Spannungsobergrenze übersteigt,
- die Netzspannung sich mit einem zeitlichen Gradienten ändert, der dem Betrage nach einen Änderungsgrenzwert übersteigt und/oder
eine Differenz der Netzspannung von einem Referenzwert und der zeitliche Gradient der Netzspannung jeweils gewichtet und zu einem Gesamtkriterium aufaddiert werden und das Gesamtkriterium absolut oder dem Betrage nach einen Gesamtgrenzwert überschreitet.

Fällt die Netzspannung unter einen vorbestimmten Spannungsgrenzwert, der beispielsweise bei 90 Prozent der Nennspannung des elektrischen Versorgungsnetzes liegen kann, wird ein Spannungseinbruch erkannt und damit ein transienter Vorgang erkannt. Eine zusätzliche oder alternative Möglichkeit besteht darin, eine Änderungsgeschwindigkeit der Netzspannung zu erfassen und dafür wird vorgeschlagen, entsprechend den zeitlichen Gradienten der Netzspannung zu beobachten, also mit welcher auf die Zeit bezogenen Steigung die Netzspannung sich ändert. Insbesondere wird hierbei ein Spannungsabfall, also eine negative Steigung und damit ein negativer Gradient, erfasst und dem Betrage nach mit einem Änderungsgrenzwert verglichen. Ein solcher Änderungsgrenzwert kann beispielsweise ein Volt pro Millisekunde (ms) betragen, oder es kann ein normierter Wert zugrunde gelegt werden, wie beispielsweise eine Steigung von einem Prozent pro Sekunde, wobei eine Spannung von 100 Prozent der Nennspannung des elektrischen Versorgungsnetzes entspricht. Hierdurch kann möglicherweise bei einem dem Betrage nach großen Gradienten ein Netzeinbruch, oder eine andere Störung, erkannt werden, bevor die Spannung ihrem absoluten Werte nach signifikant geändert wurde.

Neben einem Spannungseinbruch kann auch eine starke Spannungsüberhöhung eine Störung im elektrischen Versorgungsnetz darstellen. Entsprechend wird vorgeschlagen, auch eine solche Spannungsüberhöhung als transienten Vorgang zu erfassen. Insbesondere liegt eine starke Spannungsüberhöhung vor, wenn die aktuelle Netzspannung die normale Netzspannung, insbesondere Nennspannung des elektrischen Versorgungsnetzes um mehr als 10% übersteigt, also größer als 110% ist.

Vorzugsweise wird vorgeschlagen, sowohl die Netzspannung ihrem absoluten Werte nach zu betrachten, als auch den Gradienten der Spannung zu betrachten. Dies kann so berücksichtigt werden, dass eine Spannungsdifferenz zwischen Netzspannung und einem Referenzwert einerseits und der zeitliche Gradient der Netzspannung andererseits betrachtet werden. Sowohl diese Spannungsdifferenz als auch der Gradient werden jeweils gewichtet und aufaddiert, ggf. dem Betrage nach aufaddiert. Die beiden Gewichtungen unterscheiden sich üblicherweise und können auch die unterschiedlichen Einheiten der absoluten Spannung einerseits und des Spannungsgradienten andererseits berücksichtigen. Vorzugsweise werden die beiden Gewichtungen so gewählt, dass die gewichteten Werte einheitenlos sind.

Hierdurch kann auch das Erkennen eines transienten Vorgangs verneint werden, wenn beispielsweise die Netzspannung zwar unter einem Referenzwert liegt, der Spannungsgradient aber anzeigt, dass diese Spannung wieder am Steigen ist.

Gemäß einer Ausführungsform wird vorgeschlagen, dass von einer stationären Steuerung auf eine transiente Steuerung umgeschaltet wird, wenn ein transienter Vorgang im Versorgungsnetz erkannt wurde und/oder dass von einer transienten Steuerung zurück zu einer stationären Steuerung geschaltet wird, wenn erkannt wurde, dass ein transienter Vorgang beendet ist. Es wird somit vorgeschlagen, abhängig davon, ob ein transienter Vorgang vorliegt oder nicht, eine grundsätzlich andere Steuerung, nämlich insbesondere grundsätzlich andere Parksteuerung einzusetzen.

Für den Fall der stationären Steuerung wird vorgeschlagen, keine Vorgabewerte für den einzuspeisenden Blindstrom und/oder keine Vorgabewerte für einen einzustellenden Phasenwinkel an jede Windenergieanlage zu geben. Somit arbeiten die Windenergieanlagen des Parks im Falle der stationären Steuerung wesentlichen eigenständiger.

Im Falle der stationären Steuerung sieht eine Ausführungsform vor, dass Spannungsmesswerte, die die Parksteuerung am Netzanschlusspunkt erfasst hat, als Mittelwert mit einer ersten Taktrate an die Windenergieanlage übertragen werden oder dass solche Spannungsmesswerte gar nicht an die Windenergieanlagen übertragen werden und die Windenergieanlagen vielmehr eigene Messwerte verwenden. Die vorgeschlagene erste Taktrate ist eine vergleichsweise geringe Taktrate, die beispielsweise eine Millisekunde (ms) betragen kann.

Im Falle der transienten Steuerung wird vorgeschlagen, dass Vorgabewerte für den einzuspeisenden Blindstrom und/oder den einzustellenden Phasenwinkel an jede Windenergieanlage gegeben werden. Somit wird hier sehr deutlich und drastisch in die Eigenständigkeit der Regelung bzw. Steuerung der einzelnen Windenergieanlagen eingegriffen. Den jeweils notwendigen Phasenwinkel haben die Windenergieanlagen bisher nicht nur eigenständig eingestellt sondern auch eigenständig bestimmt. Das soll nun gemäß dieser Ausführungsform im Falle der transienten Steuerung, also der Steuerung, die verwendet wird, wenn ein transienter Vorgang erkannt wurde, nicht mehr erfolgen. Im Falle der transienten Steuerung, die insbesondere auf einen Spannungseinbruch bedingt durch einen Netzkurzschluss oder dergleichen hindeutet, ist insbesondere ein schnelles, gezieltes und vorzugsweise klar und deutlich reproduzierbares und abgegrenztes Vorgehen des Windparks vorteilhaft, wie hier erkannt und realisiert wurde. Durch das Vorgeben der Sollwerte durch die Parksteuereinheit werden die Windenergieanlagen für diesen problematischen und sensiblen Zustand des Versorgungsnetzes gezielt koordiniert.

Vorzugsweise werden im Falle der transienten Steuerung Spannungsmesswerte am Netzanschlusspunkt als Momentanwerte oder Quasimomentanwerte ermittelt und an die Windenergieanlagen übertragen. Physikalisch ist die Echtzeiterfassung und Verwendung eines Momentanwertes dem Grunde nach nicht möglich, aber möglichst schnelle Messwerte, die insbesondere nicht über mehrere Perioden im Netzmittel, sondern nur der jeweils aktuellen Periode zugeordnet sind, können verwendet werden. Sie stellen aus praktischer Sicht Momentanwerte dar, zumindest Quasimomentanwerte. Eine Möglichkeit, solche Messwerte zu erfassen, ist beispielsweise in der Patentanmeldung DE 10 2009 031 017 bzw. US 2012 0169059 A1 beschrieben und die Verwendung eines dort beschriebenen Verfahrens zur Messwerterfassung insbesondere der Spannung in einem dreiphasigen Spannungsnetz wird auch hier vorgeschlagen. Insoweit ist der Gegenstand besagter Patentanmeldung als Teil der vorliegenden Beschreibung anzusehen.

Außerdem oder alternativ wird vorgeschlagen, solche Spannungsmesswerte mit einer zweiten, gegenüber der ersten Taktrate erhöhten Taktrate an die Windenergieanlagen zu übertragen. Die Windenergieanlagen erhalten dadurch sehr schnell und zudem untereinander gleichzeitig den jeweils aktuellen Wert über die elektrische Spannung des elektrischen Versorgungsnetzes am Netzanschlusspunkt. Die zweite Taktrate wird dabei so hoch gewählt, dass die betreffenden Werte so schnell und mit schneller Anpassung an den Windenergieanlagen übertragen werden, dass eine entsprechende Netzstützung für den schwierigen und sich schnell ändernden Fall des Netzeinbruchs, insbesondere des Netzkurzschlusses mit entsprechend notwendiger Geschwindigkeit durchgeführt werden kann.

Vorzugsweise wird der Windpark so gesteuert, dass abhängig von der am Netzanschlusspunkt einzuspeisenden minimalen Gesamtwirkleistung nicht unterschritten wird. Hierbei kann erreicht werden, dass etwaige Mindestleistungseinspeisungen auch im Fall einer Kurzschlussstromeinspeisung gewährleistet wird. Eine solche Mindestwirkleistung kann von der eingespeisten oder einzuspeisenden Wirkleistung abhängig sein.

Eine weitere Ausführungsform schlägt vor, dass das Erkennen eines transienten Vorgangs an eine das elektrische Versorgungsnetz steuernde Netzsteuerzentrale gemeldet wird. Damit kann erreicht werden, dass diese Netzsteuerzentrale über diesen transienten Vorgang, also die Netzstörung informiert wird. Außerdem impliziert eine solche Information an die Netzsteuerzentrale auch, dass nun ein entsprechendes Verhalten des Windparks zu erwarten ist, bzw. das Verhalten des Windparks für diese Netzsteuerzentrale nachvollziehbar ist.

Vorzugsweise wird vorgeschlagen, dass wenigstens eine Zustandsgröße an den Netzanschlusspunkt, insbesondere die Netzspannung, dort kontinuierlich mit unverminderter Taktrate gemessen wird. Es wird aber vorgeschlagen, dass nur bei Erkennen eines transienten Vorgangs diese gemessene Netzzustandsgröße an die Windenergieanlage übertragen wird oder das zumindest nur im Falle des Erkennens eines transienten Vorgangs diese Übertragung mit möglichst hoher Taktrate erfolgt, insbesondere mit der Taktrate, mit der die entsprechenden Netzzustandsgrößen gemessen werden.

Dadurch kann erreicht werden, dass mit hoher Geschwindigkeit, nämlich mit möglichst geringer Zeitverzögerung eine Netzsteuerung erfasst wird. Das Erfassen einer Netzstörung sollte aber eine sehr große Ausnahme sein und daher wird vorgeschlagen, erst dann die entsprechenden Daten zu übertragen oder mit unverminderter Taktrate, so schnell wie möglich, zu übertragen, wenn tatsächlich auch ein transienter Vorgang, also eine Störung im Netz erkannt wurde.

Erfindungsgemäß wird zudem ein Windpark vorgeschlagen, der zum Einspeisen elektrischer Leistung an einem Netzanschlusspunkt in ein elektrisches Versorgungsnetz vorbereitet ist. Ein solcher Windpark umfasst mehrere Windenergieanlagen und eine Parksteuereinheit. Der Windpark, insbesondere seine Parksteuereinheit, ist dazu vorbereitet, ein Verfahren gemäß wenigstens einer der oben beschriebenen Ausführungsform ausführen. Nachfolgend wird die Erfindung anhand von Ausführungsformen exemplarisch unter Bezugnahme auf die begleitenden Figuren näher erläutert.
Figur 1 zeigt eine Windenergieanlage in einer perspektivischen Darstellung.
Figur 2 zeigt einen erfindungsgemäß steuerbaren Windpark schematisch.

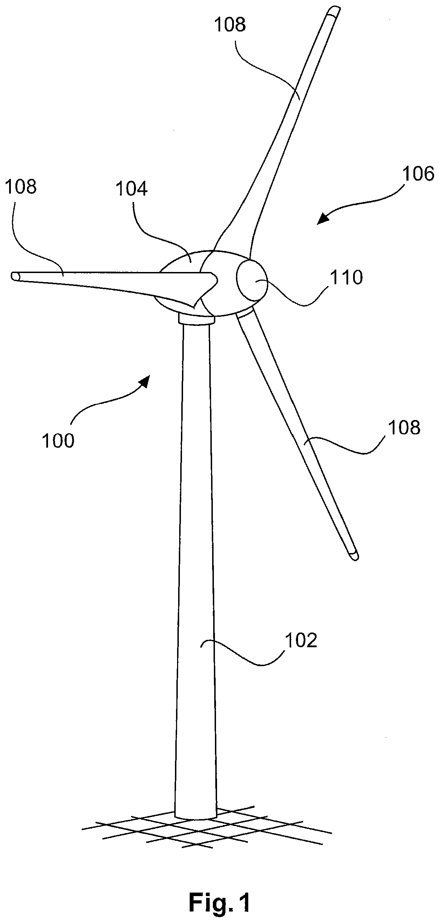

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

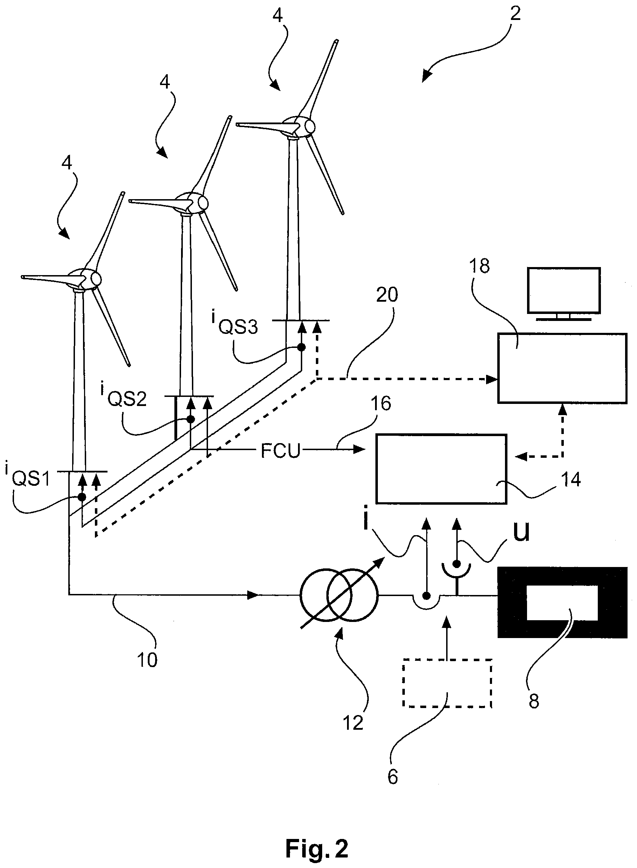

Figur 2 zeigt einen Windpark 2 mit beispielhaft drei Windenergieanlagen 4, die an einen gemeinsamen Netzanschlusspunkt 6 in ein elektrisches Versorgungsnetz 8 einspeist, dass auch vereinfachend als Netz bezeichnet werden kann. Die Windenergieanlagen 4 erzeugen dabei jeweils einzuspeisende Ströme, die in einem Parknetz 10 gesammelt und zu einem Transformator 12 übertragen werden. In dem Transformator 12 wird die Spannung in dem Parknetz 10 auf eine entsprechende Spannung des Versorgungsnetzes 8 hochtransformiert.

Am Netzanschlusspunkt 6 und damit im gezeigten Beispiel hinter dem Transformator 12, also an seiner zum Netz 8 gewandten Seite, werden der eingespeiste Iststrom Iᵢₛₜ und die dabei vorliegende Istspannung Uᵢₛₜ gemessen und einer Parksteuereinheit 14 als Messwerte zur Berücksichtigung und Auswertung zugeführt.

Die Parksteuereinheit 14, die auch als FCU bezeichnet werden kann, kommuniziert über einen FCU-Bus 16 mit den einzelnen Windenergieanlagen 4. Die Parksteuereinheit 14 kommuniziert zudem mit einem SCADA-System 18, über das einige Steuerungen und/oder Überwachungen des Parks und einzelner Windenergieanlagen vorgenommen werden können. Das SCADA-System 18 kommuniziert außerdem über einen SCADA-Bus 20 mit den Windenergieanlagen.

Es wird nun gemäß einer Ausführungsform vorgeschlagen, gemessene Werte am Netzanschlusspunkt 6 von der Parksteuereinheit 14 auch ausgewertet werden, um einen transienten Vorgang im elektrischen Versorgungsnetz 8 zu erkennen. Es werden dann aktuelle Messwerte so schnell wie möglich und mit hoher Taktrate über den FCU-Bus 16 an die Windenergieanlagen 4 übermittelt. Dazu kann insbesondere die jeweils aktuelle Spannung gehören, die am Netzanschlusspunkt 6 erfasst wurde. Auch Informationen über den Phasenwinkel des eingespeisten Stroms, nämlich den Phasenwinkel zwischen eingespeistem Iststrom und erfasster Istspannung können zu diesen aktuellen und mit hoher Taktrate übertragenen Messwerten gehören.

Außerdem oder alternativ wird vorgeschlagen, dass die Parksteuereinheit 14 bei Erkennen eines transienten Vorgangs im Netz 8 Steuerwerte an die einzelnen Windenergieanlagen 4 über den FCU-Bus 16 überträgt. Als zu übertragende Steuerwerte, die ebenfalls mit hoher Taktrate übertragen werden sollen, wird insbesondere die Übertragung eines Blindstromsollwertes i_{QS} insbesondere wird für jede der Windenergieanlagen 4 ein individueller Blindstromsollwert i_{Q1}, i_{Q2} oder i_{Q3} übertragen. Es können auch Werte für jede Phase einzeln übertragen werden. Das kann auch so erfolgen, dass ein Wert zusammen mit einem Unsymmetriegrad übertragen wird, oder dass ein Sollwert, z.B. ein Sollwert des Blindstroms sowohl für das Mitsystem als auch für das Gegensystem, im Sinne der Methode der symmetrischen Komponenten, übertragen wird. Diese Sollströme können somit in der Parksteuereinheit 14 unmittelbar aus den Messwerten für Strom und Spannung am Netzanschlusspunkt 6 berechnet werden, wobei sie aufeinander abgestimmt sind, und an die betreffenden Windenergieanlagen 4 übertragen werden. Die Windenergieanlagen 4 können dann diese geforderten Blindströme unmittelbar einstellen. Die Parksteuereinheit 14 kann somit auch kontrollieren und damit auch frühzeitig erkennen, welcher Gesamtstrom, insbesondere welcher gesamte Blindstrom eingespeist werden wird, wenn davon ausgegangen werden kann, dass die Windenergieanlagen 4 die vorgegebenen Sollwerte auch in der vorgegebenen Art und Weise umsetzen können.

Durch ein solches Verfahren kann insbesondere auch das Durchsteuern der Einspeisung des Windparks 2 durch einen Fehlerfall - auch als Fault Ride Through/ FRT bezeichnet - verbessert werden und das konkrete Verhalten des Windparks nachgewiesen werden. Insbesondere kann hierdurch auch ein notwendiger Nachweis erbracht werden, der für das Anschließen des Windparks 2 an das elektrische Versorgungsnetz 8 notwendig ist. Insbesondere wird auch die Möglichkeit einer Zertifizierung des Windparks für diesen besonders kritischen Fall verbessert.

Insoweit weicht diese vorgeschlagene Lösung auch von bisherigen Situationen in Windparks ab, bei denen jede Windenergieanlage alleine ihre Steuerung durchführt, einschließlich einer FACTS-Steuerung. Diese Steuerung kann nun zentral von der Parksteuereinheit 14 geführt werden. Die konkrete Umsetzung des jeweils zu generierenden Stroms wird weiterhin von den einzelnen Windenergieanlagen durchgeführt. Dies hat unter anderem den Vorteil, dass jede einzelne Windenergieanlage oftmals nicht die genaue Spannungshöhen und der konkrete Phasenwinkel am Einspeisepunkt bekannt war. Vorzugsweise erfolgt die Messung über ein sogenanntes Raumzeigerverfahren am Netzanschlusspunkt. Ein solches Verfahren ist in dem Dokument US 2012/0169059 beschrieben ist und kann auch als Netzzustandsbeobachtung bezeichnet werden kann.

Bei der Vorgabe des Blindleistungssollwertes, wird zunächst ein gesamter Blindleistungssollwert für den gesamten Park bestimmt und dann auf einzelne Sollwerte für jede Windenergieanlage im Park aufgeteilt. Dies kann entweder gleichmäßig erfolgen, dies kann auch nach Anzahl der Leistungsschränke, nämlich der eingesetzten Einspeiseeinheiten bzw. Wechselrichtereinheiten erfolgen, und es kann je nach jeweils verfügbaren Leistungsschränken erfolgen, wobei der Parksteuereinheit 14 hierzu Informationen bereitgestellt werden, welche Leistungsschränke, also Wechselrichter, in dem Moment zur Verfügung stehen und einsatzbereit sind. Ein zu berücksichtigendes Kriterium kann auch sein ob die jeweilige Windenergieanlage überhaupt im fraglichen Moment arbeitet. Bisher erfolgte bei existierenden Windparks das Durchfahren von Netzstörungen oder Netzfehlern (Fault Ride Through; FRT) auf der Ebene der Windenergieanlagen und nicht auf der Parkebene, die Windenergieanlagen führten dies also für sich jeweils eigenständig durch. Hierdurch wird auch der Nachweis des FRT-Verhaltens am Netzanschlusspunkt eines Windparks erschwert, was durch die vorgeschlagene Lösung nun verbessert wird.

Problematisch bei den bisherigen Konzepten war auch, dass der FACTS-Steuerung innerhalb der einzelnen Windenergieanlagen jeweils nicht bekannt war, wie die Spannungshöhe und der Phasenwinkel am Netzanschlusspunkt sind. Insbesondere wird nun vorgeschlagen, die Spannungssignale vom Netzanschlusspunkt zur Windenergieanlage zu übertragen, um dort einen relativen Abgleich für eine konkrete Blindstrombereitstellung zur optimalen Netzstützung am Netzanschlusspunkt zu erreichen. Der Transfer der Werte kann entweder in Sinusform oder in bereits verrechneten Werten aus dem Raumzeigerverfahren erfolgen.

Außerdem oder alternativ wird vorgeschlagen, einen Gesamtblindstromamplitudensollwert zu ermitteln und diesen je nach Zusammensetzung des Windparks an die Windenergieanlagen zu übertragen.

## Patentansprüche

1. Verfahren zum Einspeisen elektrischer Leistung mittels eines mehrere Windenergieanlagen (4) umfassenden Windparks (2) in ein elektrisches Versorgungsnetz (8), umfassend die Schritte
- Einspeisen der elektrischen Leistung an einem Netzanschlusspunkt (6),
- Erfassen wenigstens einer Netzzustandsgröße an dem Netzanschlusspunkt (6) mittels einer Parksteuereinheit (14) und
- Überprüfen des Versorgungsnetzes (8) auf das Vorliegen eines transienten Vorgangs **dadurch gekennzeichnet, dass**
- ein Übersenden mit erhöhter Taktrate von der Parksteuereinheit (14) aufgenommener Messwerte und/oder von der Parksteuereinheit (14) ermittelter Steuerwerte (i_{QS1}, i_{QS2}, i_{QS3}) an die Windenergieanlagen (4) erfolgt, wenn das Vorliegen eines transienten Vorgangs erkannt wurde.

2. Verfahren nach Anspruch 1, **dadurch gekennzeichnet, dass** als Netzzustandsgröße am Netzanschlusspunkt (6)
- die elektrische Spannung des Versorgungsnetzes (8),
- der Phasenwinkel wenigstens eines eingespeisten Stroms,
- der Betrag des wenigstens einen eingespeisten Stroms und/oder
- die eingespeiste Blindleistung erfasst wird und/oder
- die Phase des einzuspeisenden Stroms als Steuerwert an die einzelnen Windenergieanlagen übertragen wird.

3. Verfahren nach Anspruch 1 oder 2,
**dadurch gekennzeichnet, dass** die an die Windenergieanlagen (4) übermittelten Steuerwerte (i_{QS1}, i_{QS2}, i_{QS3}) für jede der Windenergieanlagen (4) und/oder für Gruppen der Windenergieanlagen (4) des Windparks (2) individualisiert werden, insbesondere dass
- die Steuerwerte jeweils einen Blindstromsollwert (i_{QS1}, i_{QS2}, i_{QS3}) eines einzuspeisenden Blindstroms vorgeben,
- die Summe der Blindstromsollwerte (i_{QS1}, i_{QS2}, i_{QS3}) aller Windenergieanlagen (4) einen Gesamtblindstromsollwert angeben, der die Höhe des an dem Netzanschlusspunkt (8) einzuspeisenden Blindstroms angibt, und/oder
- der jeweilige Blindstromsollwert einer Windenergieanlage (4) abhängig ist von der aktuellen Einspeisekapazität der betreffenden Windenergieanlage (4) und/oder
- vom Gesamtblindstromsollwert des Netzanschlusspunktes (8).

4. Verfahren nach Anspruch 3,
**dadurch gekennzeichnet, dass** jede Windenergieanlage (4) mehrerer Einspeiseeinheiten zum Erzeugen eines Stroms zum Einspeisen in ein elektrisches Versorgungsnetz (8) aufweist und der Blindstromsollwert (i_{QS1}, i_{QS2}, i_{QS3}) der jeweiligen Windenergieanlage (4) je größer ist, je mehr Einspeiseeinheiten die betreffende Windenergieanlage (4) hat und/oder in Funktion hat, insbesondere proportional zur Anzahl der jeweiligen Einspeiseeinheiten ist.

5. Verfahren nach Anspruch 3,
**dadurch gekennzeichnet, dass** der Blindstromsollwert (i_{QS1}, i_{QS2}, i_{QS3}) und/oder ein Wirkleistungssollwert abhängig der Nennwirkleistung und/oder des Nennstroms der jeweiligen Windenergieanlage (4) bestimmt wird, oder als darauf normierter Wert übertragen wird, soweit die jeweilige Windenergieanlage (4) in Betrieb ist.

6. Verfahren nach einem der vorstehenden Ansprüche, **dadurch gekennzeichnet, dass** das elektrisches Versorgungsnetz (8) dreiphasig ist und die an die Windenergieanlagen (4) übermittelten Steuerwerte (i_{QS1}, i_{QS2}, i_{QS3})
- phasenweise unterschiedlich sind,
- einen Unsymmetriegrad beinhalten und/oder
- über eine Mitsystemkomponente und eine Gegensystemkomponente vorgegeben werden, wobei die übermittelten Steuerwerte insbesondere jeweils einen Blindstromsollwert (i_{QS1}, i_{QS2}, i_{QS3}) eines einzuspeisenden Blindstroms vorgeben.

7. Verfahren nach einem der vorstehenden Ansprüche,
**dadurch gekennzeichnet, dass** ein transienter Vorgang dadurch erkannt wird, dass
- die Netzspannung unter einen vorbestimmten Spannungsgrenzwert fällt,
- die Netzspannung eine vorbestimmte Spannungsobergrenze übersteigt,
- die Netzspannung sich mit einem zeitlichen Gradienten ändert, der dem Betrage nach einen Änderungsgrenzwert übersteigt und/oder
- eine Differenz der Netzspannung von einem Referenzwert und der zeitliche Gradient der Netzspannung jeweils gewichtet und zu einem Gesamtkriterium aufaddiert werden und das Gesamtkriterium absolut oder dem Betrage nach einen Gesamtgrenzwert überschreitet.

8. Verfahren nach einem der vorstehenden Ansprüche,
**dadurch gekennzeichnet, dass**
- von einer stationären Steuerung auf eine transiente Steuerung umgeschaltet wird, wenn ein transienter Vorgang im Versorgungsnetz (8) erkannt wurde und/oder
- von einer transienten Steuerung zurück zu einer stationären Steuerung umgeschaltet wird, wenn erkannt wurde, dass ein transienter Vorgang beendet ist, und
- im Falle der stationären Steuerung von der Parksteuereinheit (14)
- keine Vorgabewerte für den einzuspeisenden Blindstrom und/oder einen einzustellenden Phasenwinkel an jede Windenergieanlage (4) gegeben werden und/oder
- Spannungsmesswerte am Netzanschlusspunkt (6) als Mittelwerte, mit erster Taktrate und/oder gar nicht an die Windenergieanlagen (4) übertragen werden und/oder
- im Falle der transienten Steuerung von der Parksteuereinheit (14)
- Vorgabewerte für den einzuspeisende Blindstrom und/oder den einzustellenden Phasenwinkel an jede Windenergieanlage (4) gegeben werden,
- Spannungsmesswerte am Netzanschlusspunkt (6) als Momentanwerte und/oder mit zweiter, gegenüber der ersten Taktrate erhöhter Taktrate an die Windenergieanlagen (4) übertragen werden und/oder
- der Windpark (2) so gesteuert wird, dass abhängig von der am Netzanschlusspunkt (6) eingespeisten oder einzuspeisenden Gesamtblindleistung am Netzanschlusspunkt (6) eine einzuspeisende minimale Gesamtwirkleistung nicht unterschritten wird.

9. Verfahren nach einem der vorstehenden Ansprüche,
**dadurch gekennzeichnet, dass** das Erkennen eines transienten Vorgangs an eine das elektrische Versorgungsnetz (8) steuernde Netzsteuerzentrale gemeldet wird.

10. Verfahren nach einem der vorstehenden Ansprüche,
**dadurch gekennzeichnet, dass** die wenigstens eine Netzzustandsgröße an dem Netzanschlusspunkt (6) kontinuierlich mit unverminderter Taktrate gemessen wird, aber nur bei Erkennen eines transienten Vorgangs an die Windenergieanlagen (4) übertragen oder mit hoher Taktrate, insbesondere mit der zweiten Taktrate an die Windenergieanlagen (4) übertragen wird, wobei die zweite Taktrate vorzugsweise der unverminderten Taktrate entspricht, mit der die wenigstens eine Netzzustandsgröße gemessen wird.

11. Windpark (2) zum Einspeisen elektrischer Leistung an einem Netzanschlusspunkt (6) in ein elektrisches Versorgungsnetz (8), umfassend
- mehrere Windenergieanlagen (4) und
- eine Parksteuereinheit (14), wobei
der Windpark (2), insbesondere die Parksteuereinheit (14), dazu vorbereitet ist, ein Verfahren nach einem der vorstehenden Ansprüche auszuführen.

## Claims

1. Method for feeding the electric power of a wind park (2) comprising several wind turbines (4) into an electric supply network (8), comprising the steps of
- feeding the electric power at a network connection point (6),
- recording at least one network state parameter at the network connection point (6) by means of a park control unit (14) and,
- checking the supply network (8) for the presence of a transient process **characterized in that**
- sending at an increased clock rate of the values measured by the park control unit (14) and/or of the control values (i_{QS1}, i_{QS2}, i_{QS3}) determined by the park control unit (14) to the wind turbines (4) is carried out, once the presence of a transient process has been detected.

2. Method according to Claim 1, **characterized in that** the following is recorded as the network state parameter at the network connection point (6):
- the electrical voltage of the supply network (8),
- the phase angle of at least one fed-in current,
- the value of the at least one fed-in current and/or
- the fed-in reactive power, and/or
- that the phase of the current to be fed in is transmitted as a control value to the individual wind turbines.

3. Method according to Claim 1 or 2,
**characterized in that** the control values (i_{QS1}, i_{QS2}, i_{QS3}) transmitted to the wind turbines (4) are individualized for each of the wind turbines (4) and/or for groups of the wind turbines (4) of the wind park (2), in particular that
- the control values each provide one reactive current target value (i_{QS1}, i_{QS2}, i_{QS3}) of one reactive current to be fed in,
- the sum of the reactive current target values (i_{QS1}, i_{QS2}, i_{QS3}) of all wind turbines (4) provides a total reactive current target value indicating the amount of reactive current to be fed in at the network connection point (8), and/or
- the respective reactive current target value of a wind turbine (4) depends on the current feed-in capacity of the respective wind turbine (4) and/or
- of the total reactive current target value of the network connection point (8).

4. Method according to Claim 3,
**characterized in that** each wind turbine (4) features several feed-in units for generating a current to be fed into an electric supply network (8) and the reactive current target value (i_{QS1}, i_{QS2}, i_{QS3}) of the respective wind turbine (4) is higher the more feed-in units the respective wind turbine (4) features and/or has in function, in particular in proportion to the number of the respective feed-in units.

5. Method according to Claim 3,
**characterized in that** the reactive current target value (i_{QS1}, i_{QS2}, i_{QS3}) and/or an active power set point is determined depending on the nominal active power and/or nominal current of the respective wind turbine (4) or is transmitted as a value standardized in respect thereto, in as far as the respective wind turbine (4) is in operation.

6. Method according to one of the above claims, **characterized in that** the electric supply network (8) is a three-phase network and the control values (i_{QS1}, i_{QS2}, i_{QS3}) transmitted to the wind turbines (4)
- are different from phase to phase,
- include an unbalance factor and/or
- are specified via a positive sequence component and a negative sequence component, with the transmitted control values each specifying, in particular, one reactive current target value (i_{QS1}, i_{QS2}, i_{QS3}) of a reactive current to be fed in.

7. Method according to one of the above claims,
**characterized in that** a transient process is identified because
- the line voltage drops below a predetermined voltage limit,
- the line voltage exceeds a predetermined upper voltage limit,
- the line voltage changes with a time gradient, which in terms of its value exceeds the modification limit and/or
- a difference of the line voltage is weighted by a reference value and the time gradient of the line voltage is weighted and added up to an overall criterion, which in terms of absolute figures or value exceeds an overall limit.

8. Method according to one of the above claims,
**characterized in that**
- a switch is made from a stationary to a transient control if a transient process was identified in the supply network (8), and/or
- a switch is made from a transient back to a stationary control if it was recognized that a transient process has ended, and
- in case of a stationary control the park control unit (14)
- does not provide to each wind turbine (4) any default values for the reactive current to be fed in and/or for a phase angle to be set, and/or
- measured voltage values at the network connection point (6) are transmitted to the wind turbines (4) as mean values, with a first clock rate and/or not at all, and/or
- in case of a transient control the park control unit (14)
- provides each wind turbine (4) with default values for the reactive current to be fed in and/or for a phase angle to be set,
- measured voltage values at the network connection point (6) are transmitted to the wind turbines (4) as instantaneous values and/or with a second clock rate that is increased over the first clock rate, and/or
- the wind park (2) is controlled such that a minimum total active power to be fed in is not undercut based on the total reactive power at the network connection point (6) fed in or to be fed in at the network connection point (6).

9. Method according to one of the above claims,
**characterized in that** the detection of a transient process is notified to a network control center that controls the electric supply network (8).

10. Method according to one of the above claims,
**characterized in that** the at least one network state parameter at the network connection point (6) is measured continuously at an undiminished clock rate, but is transmitted to the wind turbines (4), or transmitted at a high clock rate, in particular at the second clock rate, only upon detection of a transient process, with the second clock rate corresponding preferably to the undiminished clock rate at which the at least one network state parameter is measured.

11. Wind park (2) for feeding electric power into an electric supply network (8) at a network connection point (6), comprising:
- several wind turbines (4) and
- one park control unit (14), with
the wind park (2), in particular the park control unit (14), being prepared for performing a method according to one of the above claims.

## Revendications

1. Procédé pour injecter une puissance électrique dans un réseau de distribution électrique (8) au moyen d'un parc éolien (2) comprenant plusieurs éoliennes (4), comprenant les étapes de :
- injection de la puissance électrique au niveau d'un point de raccordement au réseau (6),
- détection d'au moins une grandeur d'état de réseau au niveau du point de raccordement au réseau (6) au moyen d'une unité de commande de parc (14) et
- vérification du réseau de distribution (8) quant à la présence d'un processus transitoire **caractérisé en ce que**
- une transmission avec fréquence d'horloge accrue de valeurs de mesure enregistrées par l'unité de commande de parc (14) et/ou de valeurs de commande (i_{QS1}, i_{QS2}, i_{QS3}) déterminées par l'unité de commande de parc (14) aux éoliennes (4) a lieu lorsque la présence d'un processus transitoire a été détectée.

2. Procédé selon la revendication 1, **caractérisé en ce qu'**en tant que grandeur d'état de réseau au niveau du point de raccordement au réseau (6)
- la tension électrique du réseau de distribution (8),
- l'angle de phase d'au moins un courant injecté,
- la valeur de l'au moins un courant injecté et/ou
- la puissance réactive injectée
est détecté(e) et/ou
- la phase du courant à injecter est transmise en tant que valeur de commande aux différentes éoliennes.

3. Procédé selon la revendication 1 ou 2, **caractérisé en ce que** les valeurs de commande (i_{QS1}, i_{QS2}, i_{QS3}) transmises aux éoliennes (4) sont individualisées pour chacune des éoliennes (4) et/ou pour des groupes d'éoliennes (4) du parc éolien (2), en particulier que
- les valeurs de commande prédéfinissent respectivement une valeur de consigne de courant réactif (i_{QS1}, i_{QS2}, i_{QS3}) d'un courant réactif à injecter,
- la somme des valeurs de consigne de courant réactif (i_{QS1}, i_{QS2}, i_{QS3}) de toutes les éoliennes (4) indique une valeur de consigne de courant réactif totale, qui indique la hauteur du courant réactif à injecter au niveau du point de raccordement au réseau (8), et/ou
- la valeur de consigne de courant réactif respective d'une éolienne (4) dépend de la capacité d'injection actuelle de l'éolienne (4) concernée et/ou
- de la valeur de consigne de courant réactif totale, du point de raccordement au réseau (8).

4. Procédé selon la revendication 3,
**caractérisé en ce que** chaque éolienne (4) présente plusieurs unités d'injection pour la génération d'un courant à injecter dans un réseau de distribution électrique (8) et la valeur de consigne de courant réactif (i_{QS1}, i_{QS2}, i_{QS3}) de l'éolienne (4) respective est d'autant plus grande que le nombre d'unités d'injection que compte l'éolienne (4) concernée et/ou qui sont en fonction est grand, en particulier est proportionnelle au nombre d'unités d'injection respectives.

5. Procédé selon la revendication 3,
**caractérisé en ce que** la valeur de consigne de courant réactif (i_{QS1}, i_{QS2}, i_{QS3}) et/ou une valeur de consigne de puissance active est déterminée en fonction de la puissance active nominale et/ou du courant nominal de l'éolienne (4) respective, ou est transmise en tant que valeur qui y est normalisée, dans la mesure où l'éolienne (4) respective est en service.

6. Procédé selon l'une quelconque des revendications précédentes, **caractérisé en ce que** le réseau de distribution électrique (8) est triphasé et les valeurs de commande (i_{QS1}, i_{QS2}, i_{QS3}) déterminées au niveau des éoliennes (4)
- sont différentes par phase,
- contiennent un degré d'asymétrie et/ou
- sont prédéfinies par le biais d'un composant de système direct et d'un composant de système inverse, dans lequel les valeurs de commande transmises prédéfinissent en particulier respectivement une valeur de consigne de courant réactif (i_{QS1}, i_{QS2}, i_{QS3}) d'un courant réactif à injecter.

7. Procédé selon l'une quelconque des revendications précédentes,
**caractérisé en ce qu'**un processus transitoire est détecté par le fait que
- la tension réseau passe sous une valeur limite de tension prédéterminée,
- la tension réseau excède une limite supérieure de tension prédéterminée,
- la tension réseau change avec un gradient temporel, qui excède, en valeur, une valeur limite de modification et/ou
- une différence de la tension réseau par rapport à une valeur de référence et le gradient temporel de la tension réseau sont respectivement pondérés et additionnés en un critère global et le critère global dépasse dans l'absolu ou en valeur, une valeur limite totale.

8. Procédé selon l'une quelconque des revendications précédentes,
**caractérisé en ce que**
- il est commuté d'une commande stationnaire à une commande transitoire, lorsqu'un processus transitoire a été détecté dans le réseau de distribution (8) et/ou
- il est commuté d'une commande transitoire à une commande stationnaire, lorsqu'il a été détecté qu'un processus transitoire est terminé, et
- dans le cas de la commande stationnaire par l'unité de commande de parc (14)
- aucune valeur prédéfinie n'est donnée pour le courant réactif à injecter et/ou un angle de phase à régler au niveau de chaque éolienne (4) et/ou
- des valeurs de mesure de tension sont transmises au niveau du point de raccordement au réseau (6) en tant que valeurs moyennes, avec première fréquence d'horloge et/ou ne sont pas transmises du tout aux éoliennes (4) et/ou
- dans le cas de la commande transitoire par l'unité de commande de parc (14)
- des valeurs prédéfinies sont données pour le courant réactif à injecter et/ou l'angle de phase à régler au niveau de chaque éolienne (4),
- des valeurs de mesure de tension au niveau du point de raccordement au réseau (6) sont transmises en tant que valeurs instantanées et/ou avec deuxième fréquence d'horloge augmentée par rapport à la première fréquence d'horloge aux éoliennes (4) et/ou
- le parc éolien (2) est commandé de sorte qu'en fonction de la puissance réactive totale injectée ou à injecter au niveau du point de raccordement de réseau (6), une puissance active totale minimale à injecter n'est pas dépassée au niveau du point de raccordement de réseau (6).

9. Procédé selon l'une quelconque des revendications précédentes,
**caractérisé en ce que** la détection d'un processus transitoire est signalée au niveau d'une centrale de commande de réseau commandant le réseau de distribution électrique (8).

10. Procédé selon l'une quelconque des revendications précédentes,
**caractérisé en ce que** l'au moins une grandeur d'état de réseau au niveau du point de raccordement au réseau (6) est mesurée en continu avec la même fréquence d'horloge, mais n'est transmise aux éoliennes (4) qu'en cas de détection d'un processus transitoire ou est transmise aux éoliennes (4) avec fréquence d'horloge élevée, en particulier avec la deuxième fréquence d'horloge, dans lequel la deuxième fréquence d'horloge correspond de préférence à la même fréquence d'horloge que celle avec laquelle l'au moins une grandeur d'état de réseau est mesurée.

11. Parc éolien (2) pour injecter une puissance électrique au niveau d'un point de raccordement au réseau (6) dans un réseau de distribution électrique (8), comprenant
- plusieurs éoliennes (4) et
- une unité de commande de parc (14), dans lequel
le parc éolien (2), en particulier l'unité de commande de parc (14), est préparé (e) pour réaliser un procédé selon l'une quelconque des revendications précédentes.
